# EUROPEAN PATENT APPLICATION

(11) **EP 2 070 409 A1**
(43) Date of publication of application: **17.06.2009**
(21) Application number: 07822914.3
(22) Date of filing: 07.09.2007
(51) Int. Cl.: A01K 23/00

(54) **BAG FOR COLLECTING EXCREMENT FROM FEMALE ANIMALS**

(30) Priority: 29.09.2006 ES 200602492
(71) Applicant: Almazan Nestares, Jesús, 26005 Logroño (ES)
(72) Inventor: Almazan Nestares, Jesús, 26005 Logroño (ES)
(74) Representative: Carvajal y Urquijo, Isabel
(86) International application number: PCT/ES2007/000507
(87) International publication number: WO 2008/037824

(57) **Abstract**

The bag is provided to be permanently fastened on the rear part of an animal (6) such as a dog and allow it to defecate inside said bag for the owner to extract it when s/he deems necessary and put it in a garbage container. To that end, the bag, made of any kind of appropriate material, has a front wall with a notch (2) shorter than the back one (3), for fastening it at the rear part of the animal (6), the notch (2) attached to the rear part of the animal and a longer wall (3) with an angle cut (4) to place the tail (5) of the animal and thus fasten the bag to said animal (6), with the help of strips (10) which can hooked and fixed at appropriate hooking points both in the bag or established on the animal vest for said bag to be appropriately fastened and fit to receive the fecal waste.

## Description

### OBJECT OF THE INVENTION

The present invention refers to a bag for animal fecal waste, preferably and mainly provided for its application in canines, without excluding cats and equines. The object of the invention is to provide dog and cat owners with a kind of bag which the animal will wear until defecation, after which the owner will remove it from the animal with the fecal waste or feces to deposit it in a garbage container or place provided to that end.

### BACKGROUND OF THE INVENTION

As it is known, companion animals and more specifically dogs, are taken to the street for them to urinate and defecate. Even though nowadays there are owners who are aware of the fact that feces dirty the streets, therefore taking a bag to place the animal feces after defecation on the ground and placing the bag and its contents in a basket or garbage container or in a place established to that end, the streets, parks and sidewalks are however full of feces which are not only unpleasant for the citizens but they also represent a hygiene problem.

In this sense, the dogs defecate in any place and in the best of cases, the feces are picked up by conscientious people, referred to before, who carry a bag to pick up the feces left by the dogs, although in many cases the animal goes away from the owner and s/he does not see if the defecation has taken place, thus making it impossible for the feces to be picked up by the animal's owner.

US 4709661 introduces a waste bag system similar to the present invention, but with noticeable differences, as regards the union means used in the animal and the configuration of the bag itself, without providing any differentiation between male and female animals.

### DESCRIPTION OF THE INVENTION

The bag being claimed is provided for the animal to wear it constantly, that is to say, attached at the rear part of the animal and said bag can collect the feces being defecated at any time and in any place, without the owner having to be constantly watching the animal, so that once the owner of the animal detects that the defecation has occurred, s/he takes the bag away from the animal and deposits it in a waste container or in a place established to that end.

More specifically, the bag of the invention is **characterized in that** it can have any geometrical configuration, it has two walls of different height, a front one and a back one, the front one being the less tall one, which is attached to the rear part of the animal, with its upper edge located under the hole through which the feces come out so that the feces fall directly into the bag, since the back wall and the taller one is attached in the same way by its upper section to the rear-upper part of the animal, all of this to prevent the feces from falling outside the bag.

Said bag, which can be made of any appropriate material, be it plastic, plasticized paper, etc., has the special feature that in correspondence with the taller wall of the bag, it incorporates an angle cut, with a vertical section and a horizontal section, at the level where the initial part of the animal tail is located, determining a means to retain the bag, with the help of adhesive bands which the bag has on both walls, and even with strips which together with adhesive bands or strips with hook or fastening means between them, which in some cases encircling the rear part of the animal, in other cases passing under the abdomen and projecting backwards, are fixed to the bag again, to fasten it to the rear part of the animal.

Within the concept being referred to, there exist numerous solutions, since for example, there can exist bags for male animals, with the configuration already mentioned, or bags for female animals, in which case the less tall wall of the bag has on the lower edge a flap which when placing the bag at the rear part of the animal is located under the abdomen of said animal, more specifically under the back area, protecting the mammary glands of the female animal.

The bags, in any of the two alternatives, can have in correspondence with the upper edge of its taller wall tongues which can be more or less long, which having adhesive are fixed to the upper part of the back of the animal, forming a complementary means to fasten the bag.

Likewise, the bag in any of the alternatives mentioned can have strips which come from the less tall wall of the bag, or even from the flap corresponding to the bags of female bags, whose strips can go under the abdomen of the animal and fixed between them, by any appropriate fastening system, at the upper part of the back of the animal. The fastening means can also comprise a long strip which also goes along the lower part of the animal, going around it and being fixed at its free end in another part or place of the bag itself, including in this case a section of complementary strip which forms a bridge in the double lacing made by the long strip at both sides of the rear part of the animal body.

The bag can also include fastening and hook strips coming from the less tall wall of the bag and from the upper edge of the taller wall, these strips comprising at their ends hook elements on a ring established to that end around certain parts of the animal body, such as the rear part of the body, the front part, and even the neck, so that in some cases, these strips or the hook means can be located in the ring located at the rear part, in other cases, they can be hooked in the intermediate or frontal ring, and in other cases, even in the ring provided to that end on the neck, rings which will correspond to what is called "vest" applied on the body of the animal.

It has also been provided that the bag has two pairs of strips which project themselves from points near the less tall wall, crossing under and over the animal to be fixed to one another at the upper part of the back or they can even cross and fix to one another at both sides of the upper part of the animal back.

The bag can also have two pairs of loop strips, that is to say, fixed by both ends on the bag and passing through the upper part of the animal legs, thus being fixed with the help of a transverse hook strip.

In all the cases mentioned, the common factor is that the bag has an angle notch of the taller wall, to place the animal tail and to hold fast, with the help of the adhesive bands or with any of the solutions referring to the strips mentioned, the bag itself.

This angle cut provided in the bag for placing the animal tail can be materialized in a king of bridge formed by a flap coming from the upper part of the upper part of the taller wall, under whose flap the animal tail will go to be fixed through the free end of the flap to the bag itself, thus determining the means to fasten it to the animal, through its tail.

In other cases, the groove or angular cut on the back part of the bag, instead of being opened by one of its ends towards the upper edge of said rear wall, ends in a wide window through which the animal tail can go and then be fastened in the groove or angular cut mentioned before, which can be complemented the adhesive bands, the hook strips and the fastening strips already mentioned, etc.

It has also been provided that the fastening strips can end in extensions with adhesive to fix them to the bag without using any other elements, or else the strips are fixed to one another, etc.

Finally, the bag can be complemented with an inner area constituted by a padded absorbing body for applying it in menstruating female animals so that the menstrual liquid from said female animals falls on said small bag and is absorbed by a part or parts included inside it, with the special feature that this embodiment variant is specifically provided for female animal menstruation.

It has also been provided that the bag can have in certain cases lower holes so that in case it is used on a female animal and this animal urinates besides defecating, the urine can be evacuated from the bag through these lower holes.

The fastening, hooking or fixing loops which are fixed to one another, to hold the bag on the animal, can be made of any appropriate material, be it fabric, plastic or elastic material, etc., and they can have external fastening means, or they can be combined in some means established in the strips themselves and others established in the body of the bag, etc., whose hook means can be adhesive, "Velcro®" pieces, hooks such as ends which can be hooked in holes, ends with buttons which can be fixed in buttonholes, ends with eye and hooks, etc.

In all the bags it is possible to place all the adhesive strips desired or deemed necessary, and even remove these adhesive strips leave the retaining strips or else the fastening means can be adhesive strips logically combined with the groove or angle cut established at the upper part of the bag itself.

It is also not to be dismissed the fact that the animal tail goes through a hole established to that end in the taller wall of the bag, or else through a rubber strip or any other appropriate material.

In any case, the owner of the animal can freely walk his/her dog on the street without any risk of the feces being deposited on said street, but instead they are directly collected by the bag for the owner to put it at any garbage container. It can also be applied in houses for the animal to defecate without leaving a stain on the floor.

### BRIEF DESCRIPTION OF THE DRAWINGS

The following is a brief description of a series of drawings which will help understand the invention better relating to an embodiment of said invention which is presented as a non-limiting example thereof.
Figure 1 shows a frontal view of a bag for animal fecal waste, specifically dogs, made according to the object of the invention.
Figure 2 shows a bag like the one in the previous figure, but in this case for using it in female animals.
Figure 3 shows a rear view of the application of the bag in figure1 on an animal.
Figure 4 shows a similar view to the one in figure 1 but with fixing tongues on the upper part or back of the animal.
Figure 5 shows a bag like the one in the previous figure for female animals.
Figure 6 shows a lateral elevation view of the application of the bag shown in figure 4 on an animal.
Figure 7 shows a view of the bag of figure 1, with lateral strips which help to fasten the bag to the animal.
Figure 8 shows a view like the one in figure 7 of a bag for a female animal with the fastening strips emerging from the flap including the bags for female animals.
Figure 9 shows a lateral view of the fastening of the bag shown in figure 7 on an animal.
Figure 10 shows a view like the one in figure 4 but with lateral strips to fasten the bag to the animal.
Figure 11 shows a view like the one in figure 5 but with strips which help fasten the bag to the animal.
Figure12 shows a lateral view of the application of the bag shown in figure 10 on an animal.
Figure 13 shows a bag for a female animal where the fastening is carried out using a long strip, with a little stip which serves as a bridge to fasten the bag.
Figure 14 shows a lateral view of the application of the bag shown in the previous figure on an animal.
Figure 15 shows an upper plant view of the application of the bag shown in figure 13 on the animal, showing the fastening using a long strip and the short strip acting as bridge on the sections at the lower part and between the back legs of the animal.
Figure 16 shows a view of a bag like the one in figure 1 with two pairs of strips with end hook elements.
Figure 17 shows a lateral view of the application of the bag in the previous figure on an animal, showing the hook of the strip ends in a ring located at the back of the animal body.
Figure 18 shows a lateral view of the animal body, including the four legs and neck, where there are included three rings of a "vest" which in any of them it is possible to hook the corresponding strips to the bag of figure 16.
Figure 19 shows a detail view of a ring like the ones shown in the previous figure, with the strips to fasten it to the animal body.
Figure 20 shows a bag like the one shown in figure (16) where the bag is provided for female animals.
Figure 21 shows a view of the fastening of the bag shown in the previous figures, on another ring from the ones provided in the animal body, specifically the intermediate ring or the one located in the front area of the animal body.
Figure 22 shows a bag like the one in figure 1 with two pairs of strips of different length for cross fastening said strips on the rear wall of the animal body.
Figure 23 shows a bag like the one in figure 2 with the strips of the bag of the previous figure.
Figure 24 shows an upper plant view of the application of the bag shown in the two previous figures on the animal body, showing the crossing of the strips for the corresponding fastening.
Figure 25 shows a lateral view of the fastening of the bag shown in figures 22 and 23 on the animal body.
Figure 26 shows a bag like the one in figure 20, where the strips, instead of having hooks at the ends, are made of rubber and are fixed using the fastening elements at their ends.
Figure 27 shows a lateral view of the practical application or way to fasten the bag represented in the previous figure on the body of the animal.
Figure 28 shows another form of fixing together the strips of the bag in figure 26, at a common upper point of the animal body, providing the union with more stability.
Figure 29 shows a bag like the one shown in figure 1 with two loop strips fixed at their ends to the bag itself.
Figure 30 shows a view of the bag in figure 2 with the hook strips shown in the previous figure.
Figure 31 shows an upper view of the application of the bag corresponding to the two previous figures on the animal body, fastening in which there is a strip like a bridge between the two loop strips, shown in the previous figures.
Figure 32 shows a silhouette of a bag with a cut under a tongue for holding the animal tail, in an embodiment variant of this form of fastening.
Figure 33 shows a view of the practical application of the bag shown in figure 32, showing how the animal tail goes under the flap which is fixed at its end to the surface of the bag.
Figure 34 shows an embodiment variant of what is shown in figures 32 and 33, where the flap or tongue has a wider end to strengthen the fastening thereof to the surface of the bag.
Figure 35 shows a view of the bag which can be applied to menstruating femal animals, and where the bag has two pairs of strips with their ends having hook elements to fasten the bag.
Figure 36 shows a bag in an embodiment variant where in angle cut for placing the animal tail there ends in a wide window established to that end in the corresponding wall of the bag, incorporating adhesive bands and fastening strips.
Figure 37 shows a view of the previous figure but in which the bag is to be applied to a female animal.
Figure 38 shows a view of the practical application or the form in which the bag is to be placed for the bag in figures 36 and 37 on the animal body.
Figure 39 shows a view according to a general perspective of a bag with a hole on the taller wall for the animal tail to go through it as well as adhesive bands and strips ending in adhesive extensions.
Figure 40 shows a bag like the one in figure 39 but applicable to female animals.
Figure 41 shows a lateral view of the application of the bags in figures 38 and 39 on the animal body.
Figure 42 shows a rear view of the application of the bags in figures 38 and 39 on the animal body.
Figure 43 shows a lateral view of the application of the bag corresponding to figure 40 on the animal body.
Figure 44 finally shows a perspective view of a bag which incorporates an absorbent interior part for menstruating female animals, this bag including any of the means to fasten it to the animal body, showing in this case adhesive strips and strips with adhesive extensions at their ends.
Figure 45 shows an embodiment of the bag object of the invention.

### PREFERRED EMBODIMENT OF THE INVENTION

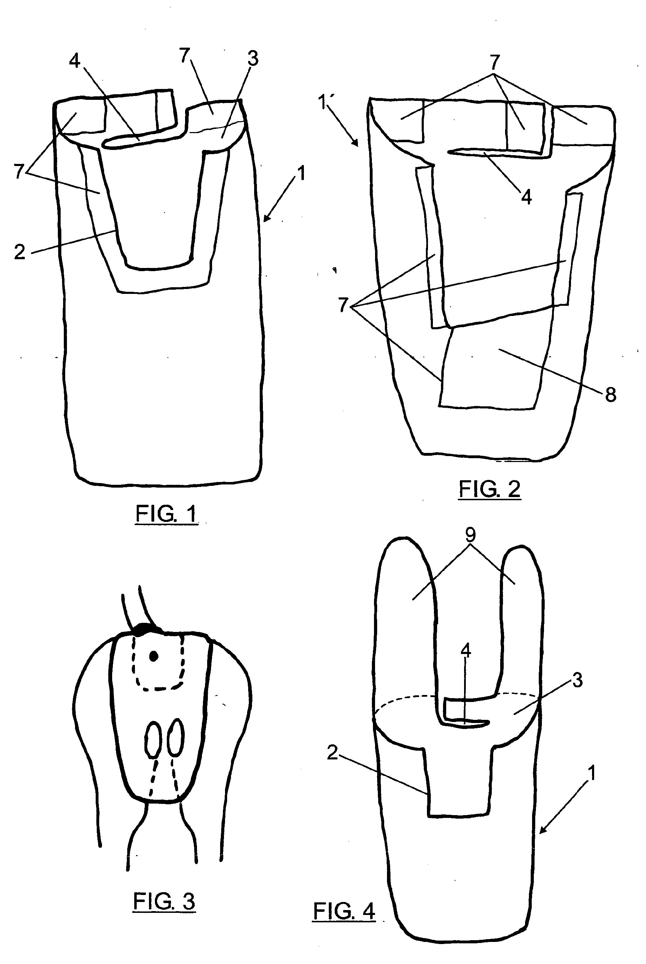

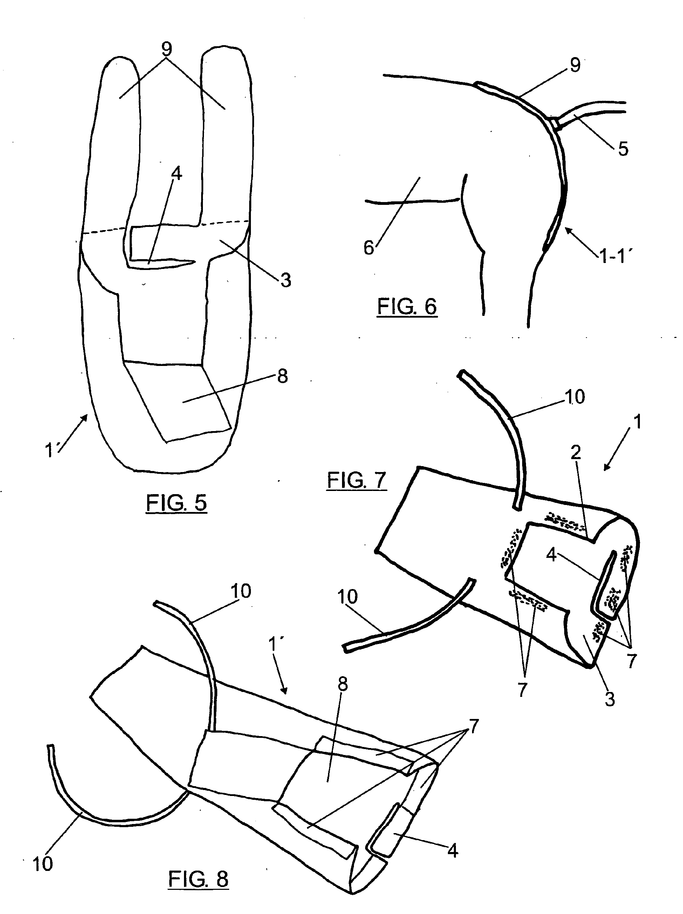

As it can be seen in the figures and specifically in relation to figure 1, it is possible to see a bag (1) specifically for male animals, which includes a front wall with a notch (2) which determines that this wall is less tall than the rear wall (3), that is to say, that the bag comprises both walls (2) and (3) mentioned, either perimetrally joined together or forming a single-piece body. In any case the bag (1) can be made of plastic, plasticized paper or another material and it has the special feature that in correspondence with the taller wall (3), it has a groove or an angle cut (4) through which the animal (6) tail (5) is placed, as it can be seen in figure 6, since said animal tail (5), and specifically the beginning thereof is located at the bottom of the aforementioned throat or groove (4). The bag also has adhesive bands or strips (7) which enable to fix the bag to the animal body, so that the bag is perfectly fastened to the rear part of the animal (6) body, with the notch (2) originating the front wall located under the anus of the animal, for the defecations to fall directly into the bag.

Figure 2 shows the bag (1') with the same characteristics of the bag (1) but applicable to a female animal, with the difference that this second bag (1') has a flap (8) which is placed under the abdomen of the animal, specifically the rear part of said abdomen. The bags (1) and (1'), as shown in figures 4 and 5, can have tongues (9) which help hold the bag on the animal body, as these tongues will have adhesive bands (7) and provide a larger adhesive surface to fasten the bag on the animal back, as shown in figure 6.

Moreover, the bag (1) or (1') can also have fastening strips (10) either coming from the less tall wall of the bag for male animals (1) or coming from the flap (7) of the bag for female animals (1'), so that those strips when placing the bag (1-1') on the rear part of the animal (6), encircle the body of the animal and are fixed to each other using any hook element (11), as shown in figure (9), said hook element (11) can be a button, a buckle, "Velcro®" strip, etc., and it must have a cut or groove (4), as it is normal in all bags, even the ones with the adhesive strips or bands (7) already mentioned.

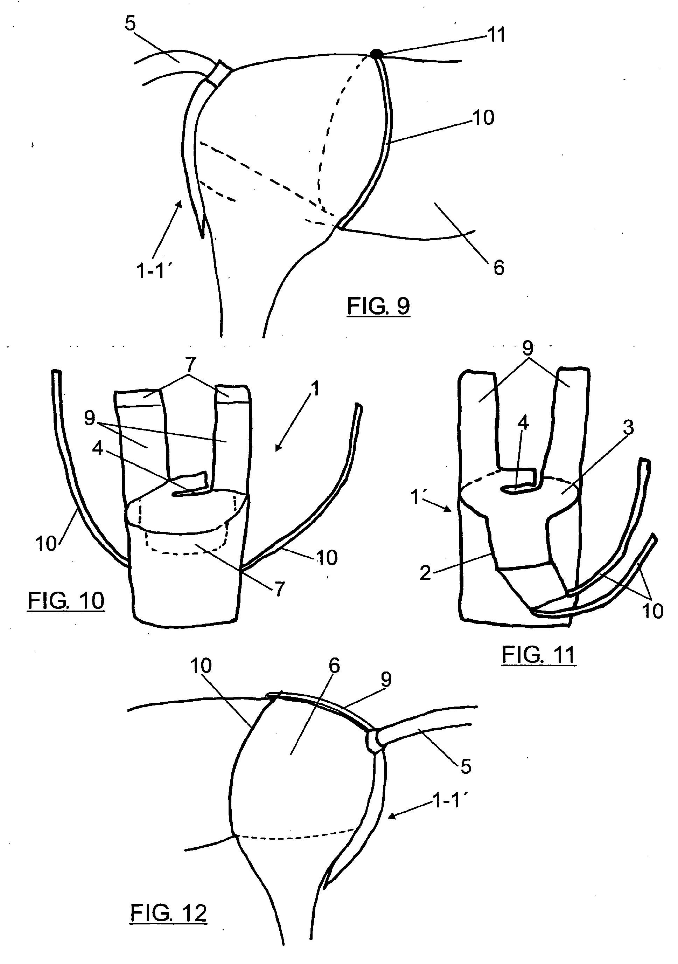

Figures 10 and 11 show the bags (1) and (1') which besides the tongues (9), adhesive strips (7), etc. have strips (10) which can be a ribbon, rubber, fabric, leather, etc., as in the previous cases, in this case helping to attain an optimum fastening of the bag (1) or (1') on the animal (6) body as shown in figure 12.

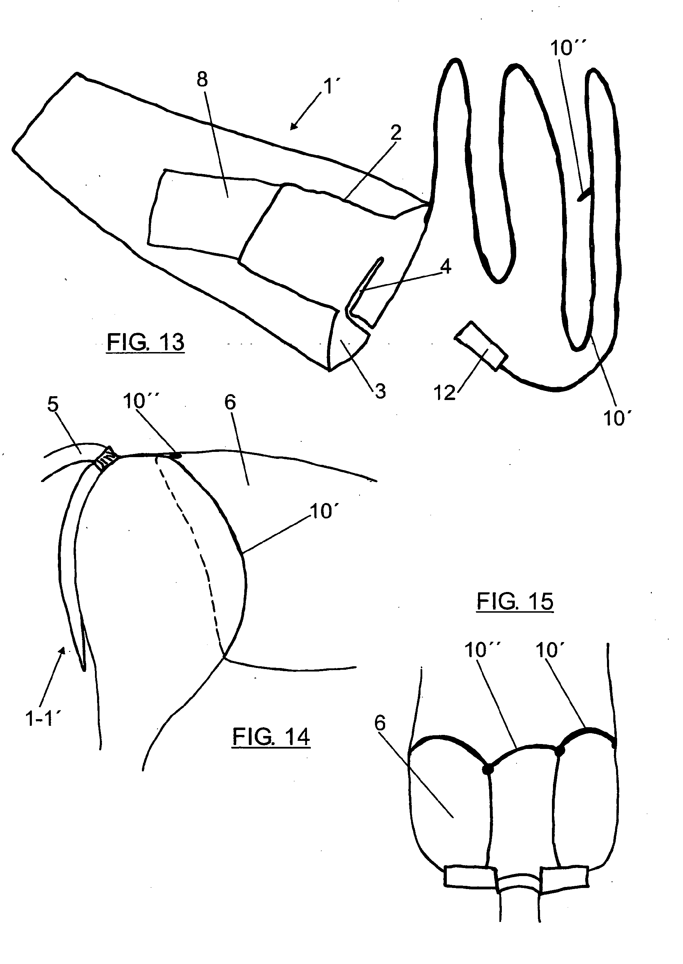

Figure 13 shows a bag (1'), which might as well be a bag (1), that is to say, both for female and male animals, in which case there is a long fastening strip (10'), which ends in an adhesive (12) part, and which after a double lacing of the rear part of the animal body, as shown in figure 1, is fixed using an intermediate strip (10") which forms part of 1 long strip (10), serving this short strip (10') as a bridge between the two loops formed by the double lacing of the strip (10') on the body of the animal, as shown in the aforementioned figure 15, where the end (12) corresponds to an adhesive part for fixing it to said long strip (10').

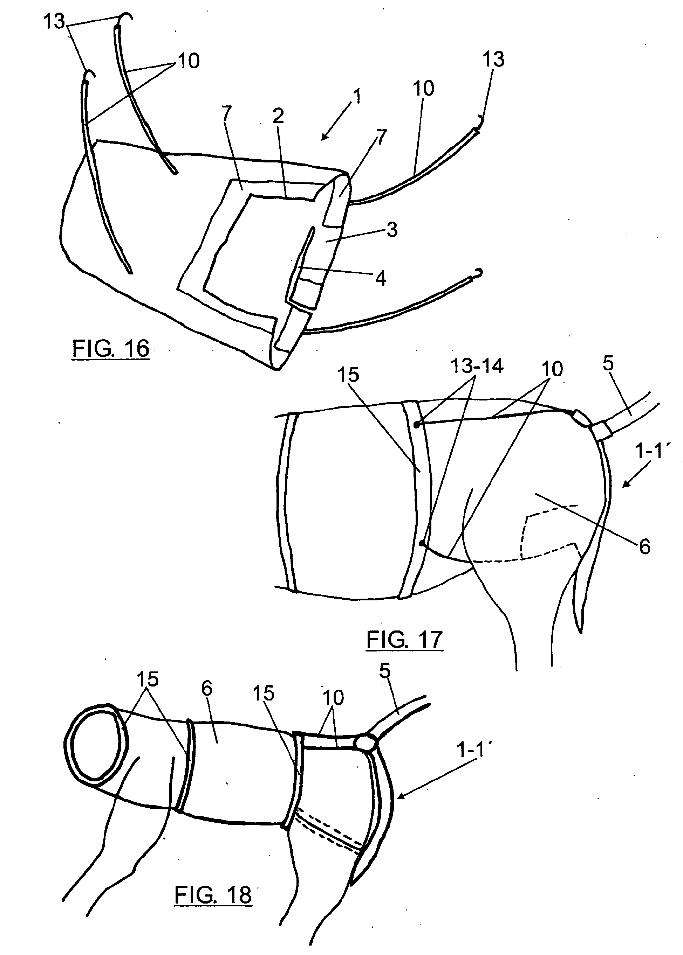

Figure 16 shows a bag (1) with the aforementioned characteristics, that is to say, with the groove or cut (4) for the animal tail, the adhesive bands or strips (7), incorporating some strips (10) which end in hooks (13) for fastening to complementary elements, such as holes or other fastening means established in a ring (15) corresponding to a vest and which encircles the animal body in correspondence with the rear part, as shown in figure 17, and in figure 18 it can be seen how the animal carries three rings (15), a back one which is the one shown in figure 17, an intermediate one and a front one, this latter one in correspondence with the neck and in any of them the strips (10) can be hooked, through the hooks (13), logically depending on the length of said strips (10). The bag (16) which includes these elements or strips (10) with their hooks (13) can be a male bag (1), as shown in figure 16, or a female bag as indicated along the present description.

Figure (19) shows specifically one of these rings (15) with holes (14) to hook or fasten the hook elements (13) of the aforementioned strips (10), ring (15) which forms part of some straps (16) to connect to one another the different rings (15) which form the vest applicable to an animal.

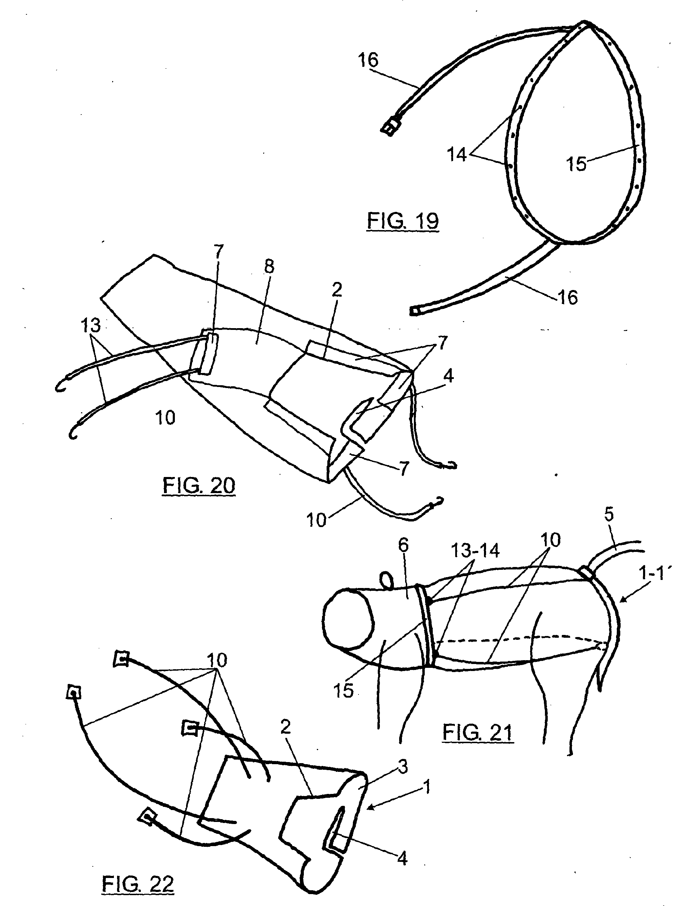

Figure 20 shows another bag for a female animal (1') with the aforementioned characteristics, incorporating as well the strips (10) with the end hook elements (13), in this case the longer ones to be fixed on the intermediate ring (15), that is to say, located at the front part, as shown in figure 21.

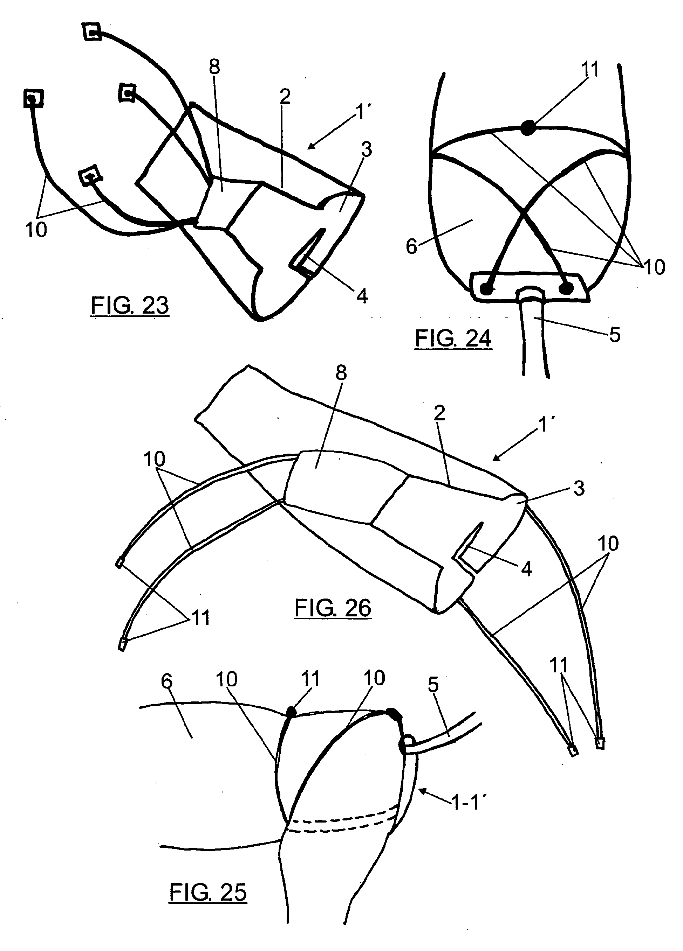

Figures 22 and 23 show bags (1) and (1') with the aforementioned characteristics and with a couple of strips (10) of different length which in this case encircles the body of the animal and are crossed upwardly, as shown in figure 4, being joined together through an upper anchoring or fixing point (11), so that the longer strips from the ones mentioned are the ones which are crossed, while the shorter strips go under the animal body and are joined together at this upper anchoring or union point (11) shown in the aforementioned figure 4.

The detail of the solution or embodiment shown in figures 22 and 23 is shown in figure 25.

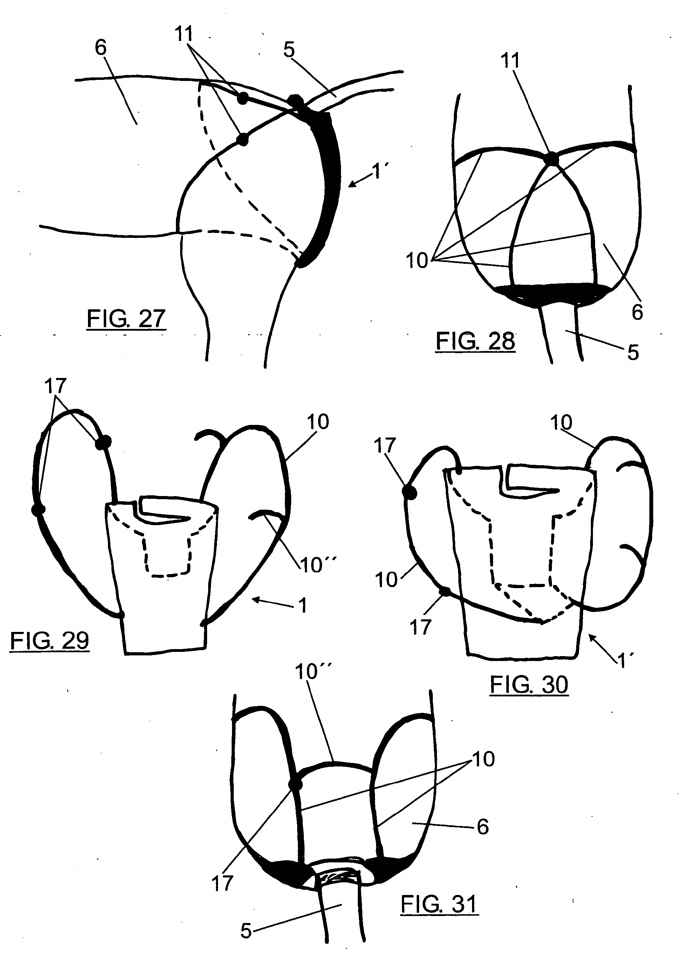

Figure 26 shows a bag (1') for a female animal, with strips (10) which have hook elements (11) of any kind at the ends, and which, when being applied to the animal (6), as shown in figure 27, are crossed and diagonally hooked, thus providing great stability in the fastening of the bag. Even though figures 26 and 27 show a bag (1') for a female animal, the solution is also valid for male animal bags (1).

Figure 28 shows the common union (11) of the four strips (10) mentioned before, that is to say, instead of diagonally hooking them, they are hooked together at a common point or element (11) in correspondence with the upper part of the body (6) of the animal.

Figures 29 and 30 show bags (1) and (1') where the strips (10) form loops, that is to say, each one of them is fixed at both ends on the corresponding bag, and they have small strips (10") like the one of the single long strip (10') in figure 13, so that these loop (10) strips encircle the body of the animal, at both sides, that is to say in correspondence with both back legs, as shown in figure 31, with the strips (10") serving as a union bridge of both loop strips (10), and whose strips (10") are fixed at opposite points (17), where there is a hook element for short transverse strips (10") acting as bridges.

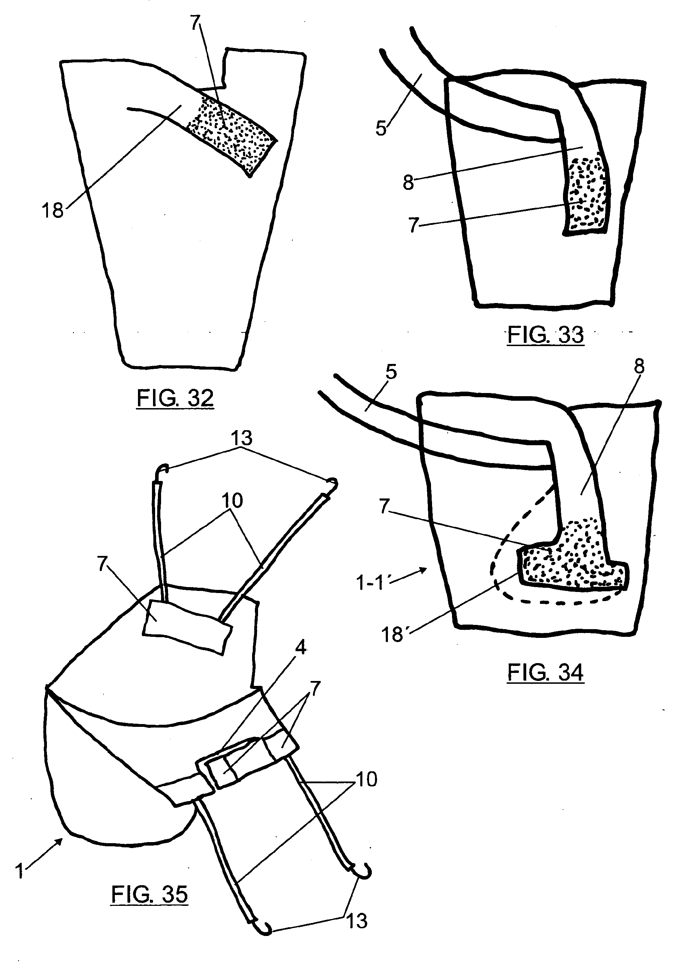

Figure 32 shows another embodiment variant for the bag (1) and (1') in which the cut (4) through which the animal tail (5) goes, determines a long flap or tongue (18) with the corresponding adhesive band (7), so that the animal tail (5), as shown in figures 33 and 34, goes under said tongue (18), holding the bag (1-1'), by fixing said tongue (18) using adhesive (7) to the surface of the bag (1-1'), as shown in figures 33 and 34, being it possible to observe in the latter one an end amplification (18') of the tongue (18) which produces a larger adhesive (7) surface to strengthen more the fastening of the bag on the animal tail (5).

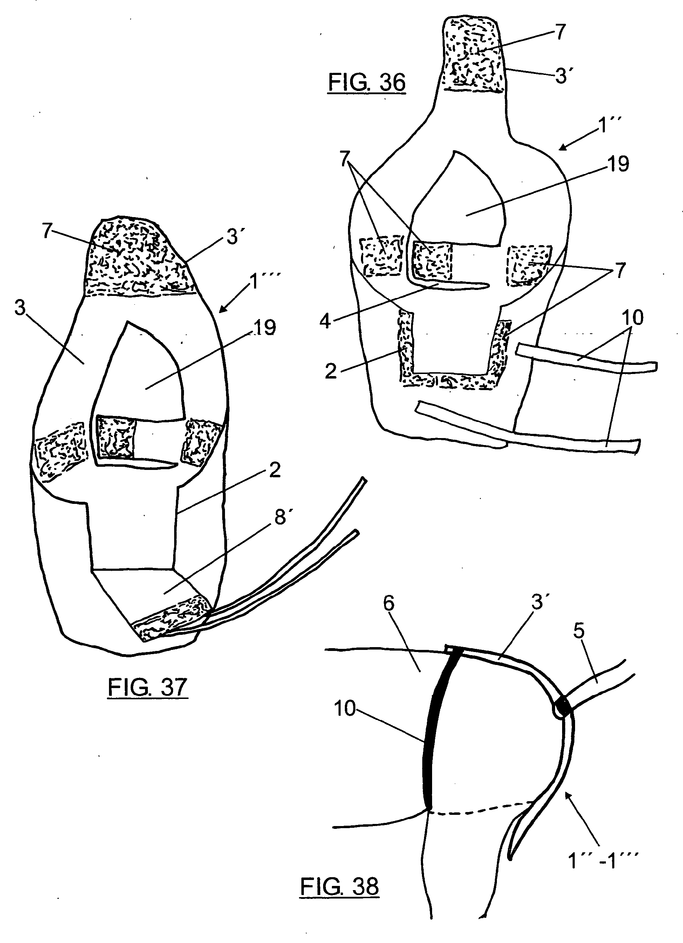

Figure 36 shows a bag (1 ") with adhesive (7) areas, and the longer wall (3) has an extension (3'), producing a greater width of the end and upper part of the wall (3), in which there is a wide window (19) where the groove (4) starts to place the animal tail after it goes through said window (19).

Figure 37 shows the bag (1") like the bag (1') with the flap (8') to apply it on bags for female animals, having this bag (1''') the same characteristics as the bag (1") with the aforementioned flap (8') and in both cases the bag (1 ") or (1''') has a pair of strips (10) to fasten it at the rear part of the animal (6), the tail (5) going through the window (19) as it was explained before, and being placed in the throat or groove (4), while at the same time the upper extension (3') of the wall (3) is located at the upper and rear part of the animal (6) body and the strips (10) encircle this rear part of the body of the animal, to establish an optimum and stable fixing of the bag on the animal.

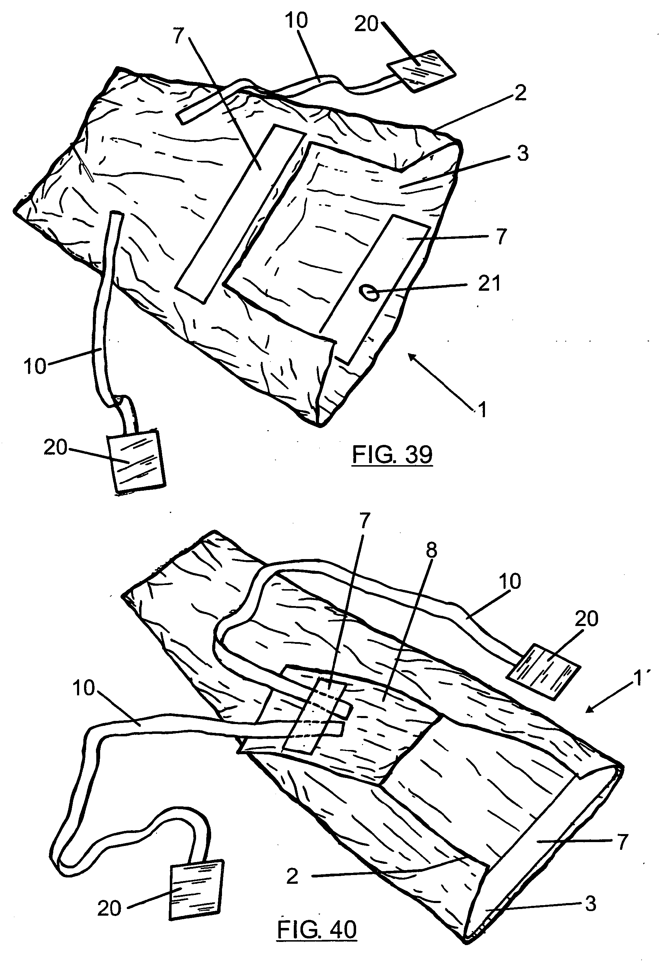

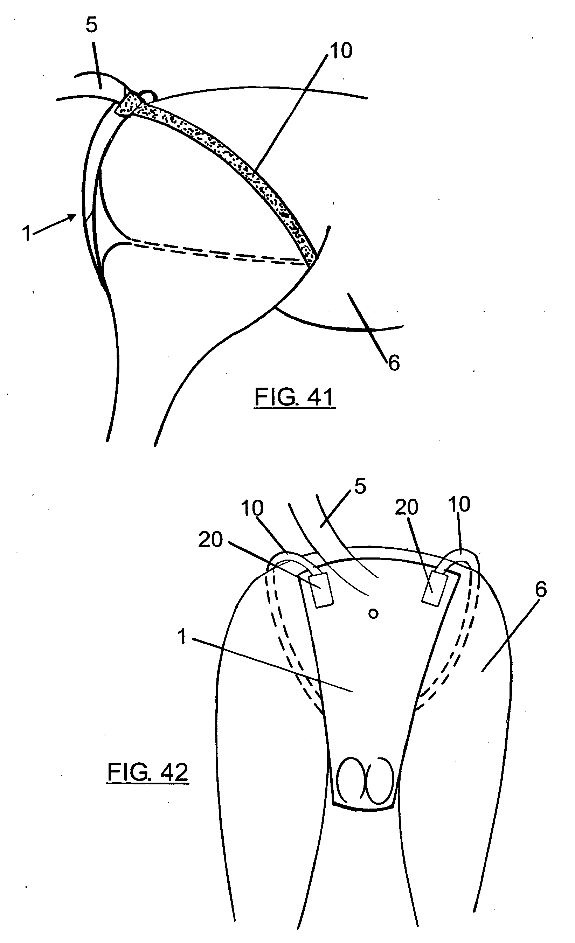

Figure 39 shows the bag (1) with the adhesive strips (7), the front wall with the notch (2), the longer rear wall (3) and the strips (10) with extensions (20) at the ends with adhesive like the one of the strips or bands (7), while figure 40 shows the bag (1') for female animals, with the same characteristics as the bag in figure 39, and figures 41 and 42 show the side and the back of the bag (1) in figure 39 fastened to the rear part of the body of the animal (6), where the tail (5) goes through a hole (21) established on the wall (3) of the bag, while the strips (10) with their end and adhesive extensions (20) are pasted and fixed to the bag (1) itself, as it is clearly shown in figure 42.

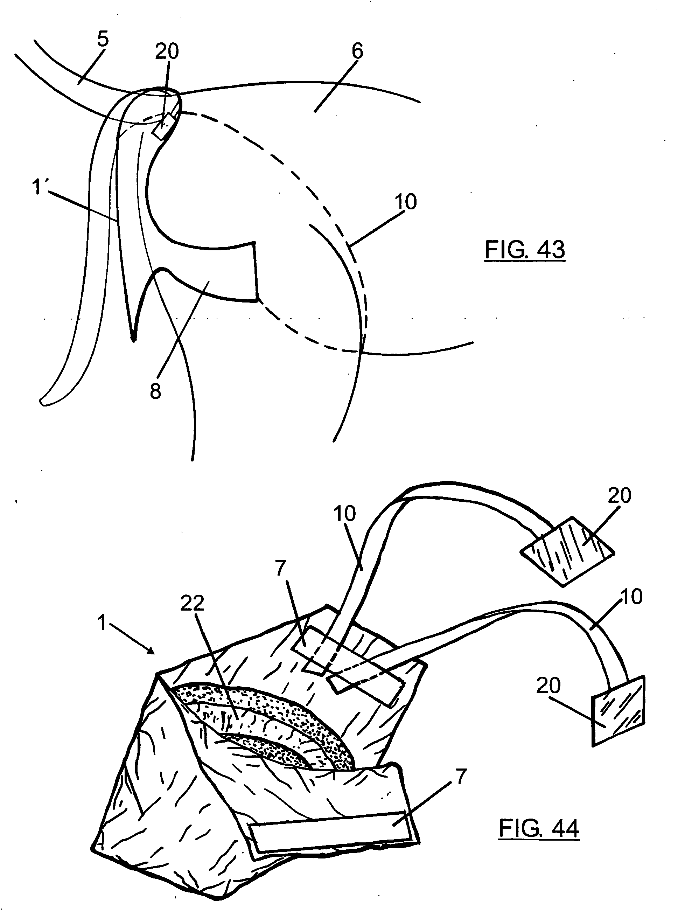

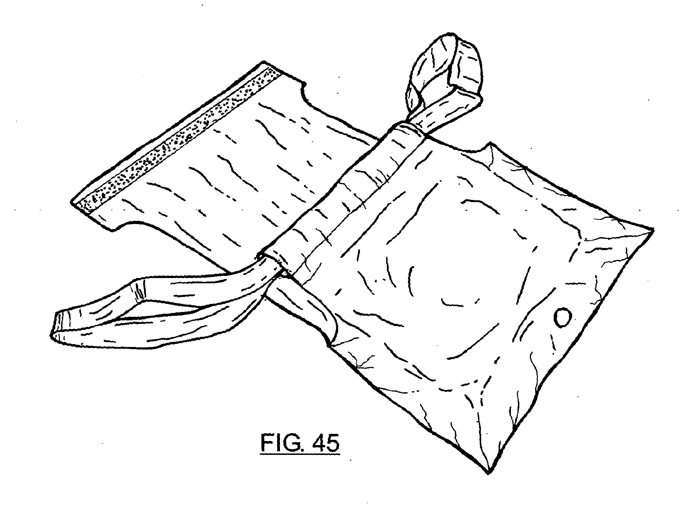

Figure 43 shows the bag (1') in figure 40 on the animal body (6), specifically on the rear part thereof and the strips (10) are represented using a dashed line. Finally, figures 35 and 44 show a bag (1) with adhesive bands (7) which have an absorbent material (22) on the inside provided for menstruating female animals, so that said absorbent material (22) absorbs the liquid originated by menstruation and prevents it from falling and dirtying the place where the animal walks. Figure 35 shows the bag with the groove or cut (4), and the strips (10) with the hooks (13) for its fastening, while figure 44 shows the bag with the strips (10) which have at their ends the aforementioned adhesive extensions (20). Figure 45 shows an embodiment of the invention, comprising a bag, with a plurality of strips, and closing adhesive elements.

## Claims

1. Bag for animal fecal waste, preferably provided for its application in companion animals such as cats and dogs, designed to directly collect defecations from said animals and to enable the owner to extract the bag at any time after the defecation has occurred, **characterized in that**
it comprises a body with any geometrical configuration, made of plastic, plasticized paper or a similar material, in which there are established two walls, a front one determining a notch (2) shorter than the back one (3), for fastening it at the rear part of the animal (6), the notch (2) being on the front wall of the bag under the anus of the animal (6) and with adhesive bands (7) for fixing and fastening the bag on the animal body, in order to enable the animal to carry it constantly until it is extracted by the owner of the animal and which preferably has a groove or angle cut (4) on the rear taller one (3) for the animal (6) tail (5) to go through it, in order to enable the fastening and suppression of the bag (1, 1'. 1", 1''');
and **in that**
the bag (1) or (1') for female animals has a flap (8) extending from its wall which has a notch (2), for placing said flap (8) under the rear part of the abdomen of the female animal.

2. Bag for animal fecal waste according to claim 1, **characterized in that** the body which constitutes the bag has any geometrical configuration and is made of plastic, plasticized paper or a similar material.

3. Bag for animal fecal waste according to the preceding claims, **characterized in that** the bag (1-1') has tongues (9) in correspondence with the upper edge of the longer wall (3), which have adhesive (7) for fixing on the upper part or back of the animal (6), thus strengthening the fastening of the bag on said animal.

4. Bag for animal fecal waste according to the preceding claims, **characterized in that** the bag (1) and (1'), besides adhesive (7) bands or strips, the angular cut (4) and the tongues (9) with adhesive, have strips (10) which come from any part of the bag or even from the flap (8), to encircle the rear part of the animal and fixing at an upper union point (11) on the back of said animal (6).

5. Bag for animal fecal waste according to the preceding claims, **characterized in that** the bag has a very long single strip (10'), coming from one of the edges of the longer wall of the bag (1-1'), having this long strip (10') a small lateral strip (10") and an extension end part with adhesive (12) for double lacing the rear part of the body (6) of the animal, strengthening said double lacing of the strip (10') through the bridge formed by short strip (10") between both parts of the lacing.

6. Bag for animal fecal waste according to the preceding claims, **characterized in that** the strips (10) can have at their end hook elements (13) for fixing them at points, such as buttonholes or hooks (14) established in one of the rings (15) which encircle the body of the animal both at the rear part thereof and at the front part or even on the neck.

7. Bag for animal fecal waste according to claim 6, **characterized in that** the strips (10) are hooked on the rear ring (15) of the ones on the animal body.

8. Bag for animal fecal waste according to claim 6, **characterized in that** the strips (10) are very long and hooked at specific points in the intermediate ring (15) provided on the animal (6) body.

9. Bag for animal fecal waste according to any of the preceding claims, **characterized in that** the bag (1-1') includes a pair of strips (10) of different length which are crossed at the rear part of the animal and fixed to one another at an upper point (11), where this union point corresponds to the shorter strips and the crossing of the longer strips.

10. Bag for animal fecal waste according to the preceding claims, **characterized in that** the bag (1-1') includes a pair of strips (10) which are crossed on the animal (6) body and fixed to one another through hook elements (11) at their ends.

11. Bag for animal fecal waste according to claim 10, **characterized in that** the strips (10) which have end hook elements (11) which are fixed to one another at a common point located on the upper part (6) of the animal body.

12. Bag for animal fecal waste according to the preceding claims, **characterized in that** the strips (10) have both ends joined to the bag (1-1') forming loops which encircle the rear part of the animal legs, strengthening the fastening through short strips (10") which serve as bridges between both loop strips (10) and are fixed at points (17) established at the other loop strip.

13. Bag for animal fecal waste according to the preceding claims, **characterized in that** the cut or groove (4) of the bags (1-1') extends in flaps or tongues (18) which have adhesive (7), are noticeably long, under which the animal tail (5) goes through, fastening the bag using adhesive (7) on the bag itself after passing the tail (5) under the flap or tongue (18).

14. Bag for animal fecal waste according to claim 13, **characterized in that** the flap or tongue (18) has at its end an extension (18') with adhesive (7) to enlarge the fastening surface of the bag.

15. Bag for animal fecal waste according to the preceding claims, **characterized in that** the bag (1-1') can have a hole (21) for the animal tail (5) to go through it.

16. Bag for animal fecal waste according to the preceding claims, **characterized in that** the strips (10) for fastening the bag on the animal (6) have extensions (10) which have adhesive for fixing said strips (10) on the surface of the bag (1) or (1').

17. Bag for animal fecal waste according to the preceding claims, **characterized in that** besides the adhesives (7), fastening strips (10) and the other elements, the bag (1) or (1') can have an absorbing material (22) to use it on menstruating female animals.
